Europäisches Patentamt

European Patent Office

Office européen des brevets

(11) Publication number: **0 176 615**
**A1**

## EUROPEAN PATENT APPLICATION

(21) Application number: **84111794.8**

(22) Date of filing: **03.10.84**

(51) Int. Cl.⁴: **B 60 Q 1/14**

(43) Date of publication of application:
**09.04.86** Bulletin **86/15**

(84) Designated Contracting States:
**DE FR GB IT NL SE**

(71) Applicant: **Kim, In-Kun**
**496 Ena Road Apt. 811**
**Honolulu Hawaii(US)**

(72) Inventor: **Kim, In-Kun**
**496 Ena Road Apt. 811**
**Honolulu Hawaii(US)**

(74) Representative: **Jochem, Bernd,**
**Dipl.-Wirtsch.-Ing. et al,**
**Staufenstrasse 36 Postfach 17 41 09**
**D-6000 Frankfurt/Main(DE)**

(54) Apparatus for controlling the light of the headlights of a vehicle.

(57) The apparatus for controlling the light of the headlights of a vehicle controls the current or voltage of the lamps. In order to avoid any glare without the necessity of manual actions during driving and stopping the light is controlled either as a function of the brightness outside the vehicle or as a function of its state of motion. The long distance light is controlled as a function of spot light in front of the vehicle. There are provided first light sensing means (1, 2, 4, 5, 6, 11, 17, 18) for sensing ambient light and second light sensing means (25, 26, 29, 31) for sensing spot light.

EP 0 176 615 A1

./...

Croydon Printing Company Ltd

Fig. 1

The invention concerns an apparatus for controlling the light of the headlights of a vehicle by controlling the current or voltage of the lamps of the headlights

## Background of the invention

Disability glare and discomfort glare have been studied for many decades. In road or street traffic, adaptation glare as a special kind of disability glare plays an important rôle. Two situations are well known to motorists: the abrupt decrease of illumination when driving at daytime into a tunnel or the disturbing light beam of oncoming or approaching cars at nighttime. Many attempts have been made to overcome the disadvantages of adaptation glare, in particular to eliminate the adaptive glare in night traffic. On principle, there are three methods for decreasing adaptation glare. The first method is to increase the average luminous intensity of road illumination. This, however, can only be put into effect by increasing the number of streetlamps. By doing so, the streetlamps themselves will cause a glare effect. The second method is to influence the light beam of the headlights of the cars directly or indirectly. Lightabsorbing spectacles have been made for this purpose without having had a decisive positive effect. A third method lies in the use of polarized light. It is, however, impossible to eliminate the indirect glare by reflections of puddles or smooth road surfaces by the use of polarized light.

### Prior Art

Prior art control means for controlling the intensity or direction of light of the headlights in a vehicle simply switch over from the long-distance light emission to the antidazzle light emission, if the brightness outside the vehicle passes a certain threshold, and they switch back to the long-distance light, if the brightness is falling below this treshold.

The disadvantage of these prior art control means lies in the fact that the abrupt transition from high beam to low beam causes
a glare which is to be avoided.


## Problem

It is an object of the present invention to avoid any glare
and any manual actions during driving and/or stopping and/or
starting a vehicle.


## Solution

The above-mentioned  problem is solved by the invention by
either controlling the light as a function of brightness outside the vehicle or as a function of the state of motion of
the vehicle.


## Advantageous effects in the invention

One of the advantages of the invention is that the headlights of
a vehicle, particularly of a car, can be adjusted according to
the intensity of the headlights of cars coming accross and the
brightness of the environment in front of the car to maintain
the proper brightness condition and prevent the glare or blindness effect when abrupt variation of brightness condition occurs.
That means the invention adjusts the brightness variation to the
driver instead of the driver having to adjust his eyes to the
brightness variation. Another advantage lies in the fact that
the headlights will automatically be switched off when the
vehicle does not move. A further advantage of the invention lies
in the fact that the motorist can always pay attention to the
mere driving, since he is not averted from doing this by
carrying out various actions such as turning on and off the
high beam. Particularly in the dark area, if the intensity of a
car coming across is more powerful than a prescribed intensity
the headlights will flash on sufficient beam to help the eyes
adjust to the brightness  variation quickly. Also, according
to this invention, the headlight can be changed into assistant
light due to the street lamps or lamps of the stores. Still, the
automatic controller of the headlight according to this invention
operates the headlight to the highest intensity when driving
in a dark area.  When driving in a city, the bright light or
high beam will automatically be switched off.

Description of the drawings

In the following the invention will be described by having reference to the drawings which disclose one exempfliefied embodiment only. Other embodiments may easily be realized under the scope of the present invention. It is illustrated in

Fig. 1 a drawing of an automatic controller according to the present invention;

Fig. 2 another embodiment of a part of the circuit illustrated in Fig. 1.

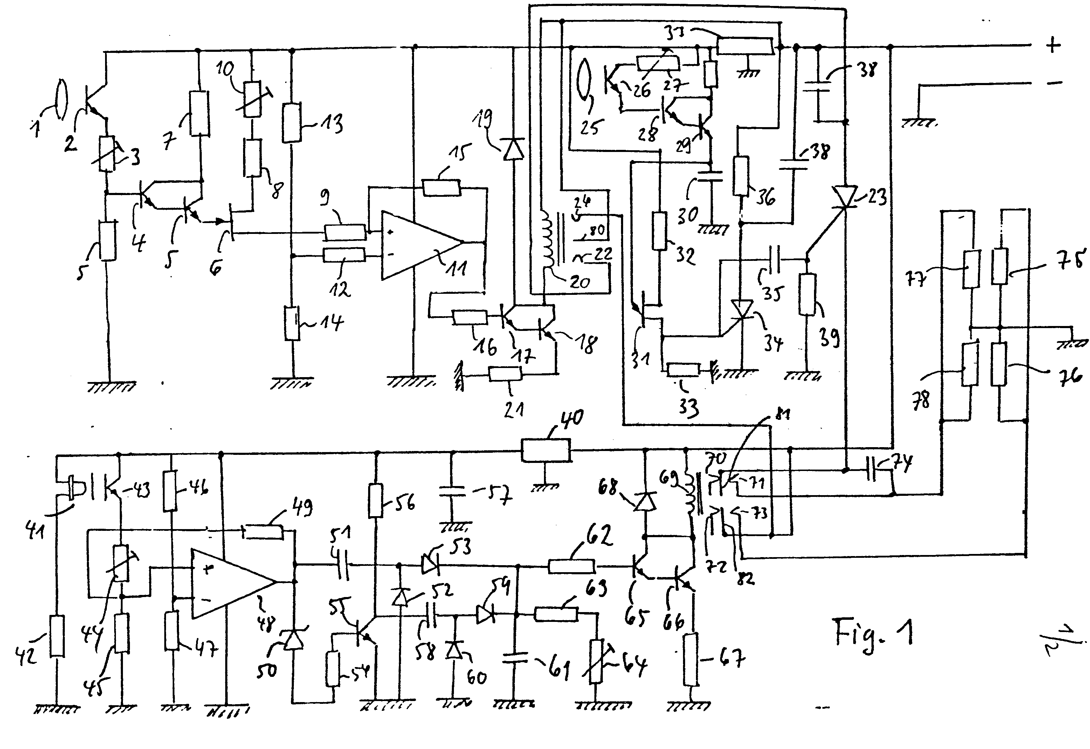

Fig. 1 illustrates an electronic control circuit according to the present invention, in which a lens 1 is arranged opposite to a photoelectric transistor 2. The emitter of this transistor 2 is connected to a variable resistor 3, which, in turn, is connected to the basis to a transistor 4 and to another resistor 5 which is connected to earth. The emitter of the transistor 4 is connected to the basis of a transistor 5, the emitter of which is connected to the gate of a field effect transistor 6. The collectors of the transistors 4 and 5 are connected to each other and also connected to a resistor 7 which is connected to the collector of the transistor 2. Source and drain of the field effect transistor 6 are connected to resistors 8 and 9, respectively, and resistor 8 is connected to a variable resistor 10 which is connected to resistor 7 and to the collector of transistor 2. The second terminal fo resistor 9 is connected to the positive input of an differential amplifier 11, the negative input of which is connected to a resistor 23 which is connected to the junction between two resistors 13, 14 operating as a voltage divider. Whereas resistor 14 is connected to earth, resistor 13 is connected to resistors 10 and 7 and to the collector of transistor 2. A feedback resistor 15 is connected between the output and the positive input of the differential amplifier. Furhter, the output of the differential amplifier 11 is connected to a resistor 16 which is connected to the basis of a transistor 17, the emitter of which is connected to the basis of a transistor 18. The collectors of transistors 17, 18 are connected to each other, and their junction is connected to the anode of a diode 19 as well as to a coil 20 of a relay. The emitter of transistor 18 is connected to earth, via a resistor 21. Contact 22 of the above-mentioned relay is connected to the anode of a thyristor 23, whereas contact 24 of this relay is connected to another relay.

Another lens 25 is located adjacent to a photo transistor 26, the collector of which is connected to a resistor 27, whereas the emitter of this photo transistor 26 is connected to the basis of another transistor 28. The emitter of this transistor 28 is connected to the basis of a further transistor 29, the emitter of which is connected to a capacitor 30. A unijunction transistor 31 is connected to the junction between transistor 29 and a capacitor 30 by means of its control gate. The sources and drains of this transistor 31 are connected to resistors 32,33 respectively, one of these transistors 33 being connected to earth, whereas the other resistor 32 is connected to the cathode of the diode 19. The control gate of a thyristor 34 is connected to the junction between transistor 31 and resistor 33 as well as to a capacitor 35, while the cathode of this thyristor 34 is earth-connected. The anode of thyrister 34 is connected to resistor 36 which, in turn, is connected to an integrated circuit 37 and to the plus pole of a battery. A capacitor 38 connected in parallel to this resistor 36. One terminal of a further capacitor 38 is also connected to the plus pole of the battery while its other terminal is connected to the anode of thyristor 23 and to the contact 22 of the relay. The control gate of thyrister 23 is connected to capacitor 35 and to an earth-connected resistor 39.

The plus-pole of the above-mentioned battery is also connected via an integrated circuit 40, a light emitting diode 41 and a resistor 42 to earth. A series connection of a photosensitive transistor 43, a variable resistor 44 and a resistor 45 is connected in parallel to the light emitting diode and to the resistor 42. Two resistors 46,47 are also connected in parallel to the diode 41 and the resistor 42. The positive input of a differential amplifier 48 is connected to the junction between resistor 45 and variable resistor 46 while the negative input of this amplifier 48 is connected to the junction between resistors 46 and 47. Also, a feedback resistor 49 is provided which connects the output of the amplifier 48 with the positive input of same.

The output of this amplifier 48 is further connected to the cathode of a zener diode 50 as well as to one terminal of a capacitor 51. The other terminal of capacitor 51 is connected to the cathode of a diode 52 and to the anode of a diode 53. The arode  of the above-mentioned zener diode 50 is connected to a resistor 54 which, in turn, is connected to the basis or control electrode of a transistor 55, the emitter of which is earth-connected and the collector of which is connected to a resistor 56. This latter transistor 56 is connected to the output of the integrated circuit 40. A capacitor 57 which is also connected to the output of circuit 40 is connected to earth.

As mentioned above, the collector of transistor 55 is connected to resistor 56. Besides this it  is also connected to a capacitor 59 which is connected to the anode of a diode 59 and to the cathode of a diode 60. The cathodes of the diodes 53 and 59 are connected to each other and they are also connected to an earth-connected capacitor 61 as well as to the resistors 62, 63. Whereas the latter resistor 63 is connected to an earth-connected resistor 64, the resistor 62 is connected to the control electrode of a transistor 65, the emitter of which is connected to the control electrode of a transistor 66. The collectors of both transistors 65, 66 are connected to each other. The emitter of transistors 66 is connected to a resistor 67 which, in turn, is connected to earth. The collector of transistor 65 is connected to the anode of a diode 68, the cathode of which is connected to the input of integrated circuit 40 and, thus, to one terminal of a coil 69 and the positive pole of the battery. This coil 69 is part of a relay having contacts 70-73. Contact 71 is connected to a capacitor 74 which is connected to the cathode of thyristor 23. Contact 73 is connected to the resistances 75, 76 of headlight lamps. Similarly, contact 71 is connected to other resistances 77 , 78 of headlight lamps. One terminal of each of the resistances 76-78 is connected to one terminal of each other resistance thus establishing a junction which is, in turn, earth-connected.

As can be understood from Fig. 1, a first part of the circuit is constituted by lens 1, transitors 4,5,17,18,field effect transistor 6 and integrated circuit 11. This circuit is adapted to sense the ambient light and turn off or turn on the long-distance beams by means of a relay 20,22,24. If an approaching car has reached a distance of 200-300m, the upward light is changend into subsidiary light.

A second part of the circuit is constituted by the photosensitive element 26, transistors 26,28,29, unijunction transistors 31 and thyristors 23, 24. This part of the circuit has the function of subsidiary lithting in order ot adjust driver's eyes to surroundings.

A third part of the circuit is constituted by the integrated circuit 48, the transistors 55, 65, 66 and the relay 69, 70 - 73. This part of the circuit has the function of turning off the headlight when the vehicle is started or stopped.

The lens 1 is arranged adjacent to the photo tansister 2 in order to supply this tranistor 2 with the intensity of radiation. The voltage produced by this transistor 2 is divided through transistor 2, variable resistor 3, resistor 4 and 5 and thus influences transistor 4. By means of transistors 4 and 5 electric current is supplied to the gate of field effect transistor 6 which, in turn, sends injection signals to the integrated circuit 11 through the variable resistor 10, resistor 8 and resistor 5.

The output signal of the integrated circuit 11 flows into the base of transitor 17 through the protective resistor 16. Then the relay 20,22,24 becomes magnetised and contact 80 is seperated from contact 22 and connected to contact 24. Thus, the downward light of lamps resistors 75, 76 is turned on by a corresponding supply of electric current to contact 73 of relay 69, 70-73.

When no light is detected by lens 1, the resistance of photo transistor 2 is nearly infinite. Therefore, no voltage of the resistor 3 is supplied to transitor 4, and supplement of electric current cannot be obtained through transistors 5,6,17,18 and integrated circuit 11. Accordingly relay 20, 22, 80, 24 turns on upward headlight 77,78 which is related by means of an electric connection to thyrister 23, whereby the contacts of this relay are changed. The intensity of radiation is controlled by the variable resistor 3.

When the photo transistor 2 accepts light beams and when contact 80 in relay 20,22,80,24 returns to 22, the lens 25 of photo transistor 26 brings together beams at the photo transistor. The photo transistor 26 sends much electric current ot the base of the transistors, step by step according to the intensity of the increasing light. The emitter of transistor 28 sends a high current to the base of transistor 29, while the emitter of transistor 29 sends a high current to the gate of the unijunction transistor 31. In that time, a great amount of charge and discharge electricity (capacitor 30) comes out at the gate of the unijunction transistor 31 and at resistor 33. The voltage charged by capacitor 30 discharge and an electric current flows to the gate of the thyrister 34 according to pulse signals.

After counteract pulses have been descended between both extrems of resister 33, discharging pulse signals come out between both ex' ems of resistor 33, through capacitor 35 and resistor 39, pass the pulse signals through the gate of the thyristor. At this time, the cathode of thyrister 23 sends electric power through relay 20,22, 80, 24. Capacitor 38 which is used for counteraction in order to counteract pulse signals which are devided when relay 20,20,80,24, is converted. The anode of thyrister 23 turns in upward light on starting and cuts electric current to upward light and does not send the source of electric power to resistance 77,78.The integrated circuit 37 re-creates static electricity voltage for suitable supply of the source of electric power. The variable resistor 27 is a resistor for regulating the intensity of radiation, whereas resistor 32 is a protective resistor with respect to unijunction resistor 31.

At the time when the vehicle is stopped and if no intensity of radiation is detected on the light sensitive transistor 26, the two contacts 22 and 80 of the relay tough each other . As a consequence resistors 75,76,77,78 turn on at the same time and the visual field keeps wide.

The circuit which is constituted by means of the integrated circuit 48 together with the transistors 55,65,66 is able to turn on the headlight on starting and to turn off the headlight when stopping. If the signal is generated in a Schmitt trigger constituted by the light emitting diode 44, the photo sensitive transistor and the circuit 48, a globular shaped wave is generated which is changed through diodes 60, 59 and which is charged in capacitor 61. The globular shaped wave is not discharged and charges capacitor 61 through capacitor 51 and diodes 52, 53. Upward light 77,78 and downward light 75,76 would be controlled by changing or not changing contacts 71 to 81 and contact 73 to 82 according to discharging through resistor 63 and variable resistor 64. The transistors 65,66 are magnetizing the relay 69, 70-73, 81, 82. At the time of stopping, no signal is generated at transistor 43 and no globular shaped wave is generated at the integrated circuit 48. No voltage is sent to transistors 65,66 or to relay 69, 70-73,81,82 and, consequentely, this relay is not magnetized. So the source of electic power is not send to resistors 75,76,77,78.

Resistor 42 is a protective resistor for the light emitting diode 41, whereas the variable resistor 44 is resistance for correction of the globular shaped wave. The resistors 46,47 are classification resistors for setting up a datum point, whereas resister 49 is a resistance for correction of hysteresis, and resister 54 is a base protection resistance for transistor 55. Resistor 56 is a load resistor for transistor 55, whereas resistor 64 is a resistance for regulating of delayed time. Resistor 62 is an emitter stabilizing resistance of the transistor 66. Diode 68 is a protective diode.

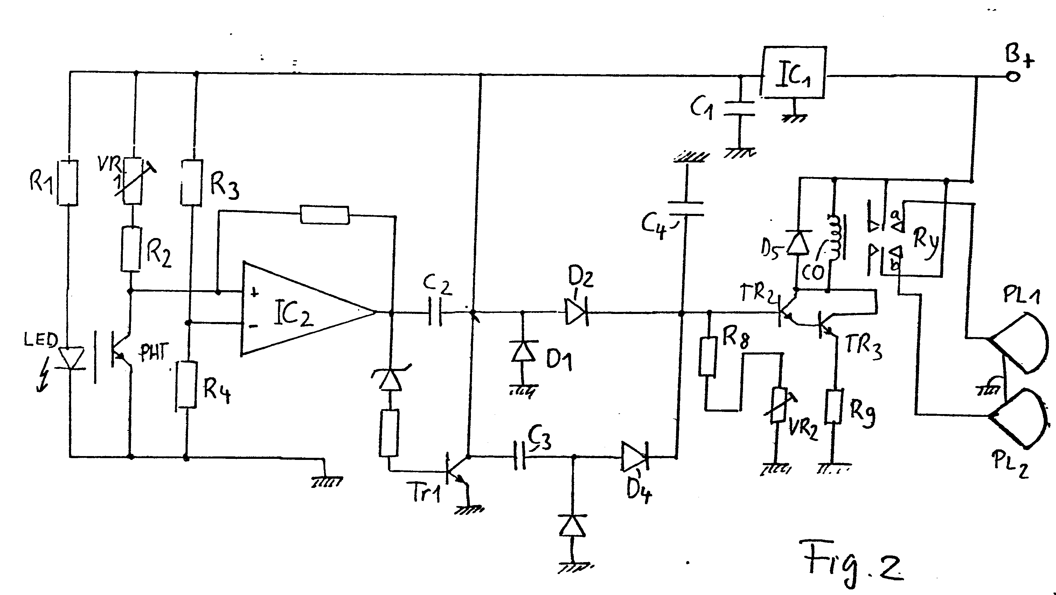

Fig. 2 illustrates a circuit using CdS-sensors instead any photo transistors. At that time when the CdS-sensor receives high illumination and if it is connected to capacitor $C_3$ and to the gate of the unijunction resistor through variable resister $VR_1$, the resistance will be dimimished and charge capacitor $C_3$ . The capacity of charging or discharging is larger with high beam and it is smaller with low beam through unijunction resistor $UIT_1$ and resister $R_3$. $OL_1$ and $PL_2$ are turned on or turned off respectively.

Fig. 2 shows two lamps $PL_1$, $PL_2$ being connected to the contacts a, b respectively of a relay $R_y$. This relay $R_y$ can be actuated by a coil Co which is connected in parallel to a diode $D_5$ and with one of its ends to collectors of the transistors $TR_2$ and $TR_3$. The other end of this coil Co as well as the cathode of the diode $D_5$ are connected to one terminal of a battery B and to the output of on integrated circuit $IC_1$, the input of which is connected to a capacitor $C_1$. Both, the capacitor $C_1$ as well as the integrated circuit $IC_1$ are connected to earth. The emitter of transistor $TR_2$ is connected to the basis of transistor $TR_3$, whereas the emitter of transistor $TR_3$ is connected via resistor $R_9$ to earth. A resistor $R_8$ and a varialbe resistor $VR_2$ are series-connected with one of their terminals, whereas the other end of the variable resister $VR_2$ is connected to earth and the other end of resistor $R_8$ is connected to the basis of transistor $TR_2$. To this basis of transitor $TR_2$ are

also connected a capacitor $C_4$, the cathode of a diode $D_2$ and the cathode of a diode $D_4$. The other end of the capacitor $C_4$ is earth-connected. The anode of the diode $D_4$ is connected to the cathode of the diode $D_3$, the anode of which is earth-connected. A capacitor $C_3$ is connected to the anode of the diode $D_4$, as well as to the cathode of diode $D_3$; the other terminal of this capacitor $C_3$ being connected to the collector of a transistor $TR_1$, the emitter of which is earth-connected. Also, the collector of transistor $TR_1$ is connected the a capacitor $C_2$ as well as to the anode of diode $D_2$, to the cathode of diode $D_1$ and to a resistor $R_7$. The other terminal of this resistor $R_7$ is connected to the capacitor $C_1$ and to the integrated circuit $IC_1$. The basis of the above-mentioned transistor $TR_4$ is connected to the anode of a zener diode $Z_1$, the cathode of which is connected to capacitor $C_2$, to a resistor $R_5$ and to the output of an integrated circuit $IC_2$. Resistor $R_5$ is a feedback resistor connecting the output of the integrated circuit $IC_2$ with the positive input of the this integrated circuit $IC_2$. The negative input of intergrated circuit $IC_2$ is connected to the junction between resistors $R_3$ and $R_4$ which form a voltage divider, whereas the positive input of integrated circuit $IC_2$ is connected to the junction between the collector of transistor OIT, the emitter of which connected to earth and to the other terminal of resistor $R_4$ as well to the cathode of a light emitting diode LED. The collector of transistor PHT is also connected to resistor $R_2$ which, in turn, is series connected to a variable resistor $VR_1$ is connected to a resistor $R_1$ the other terminal of which is connected to the anode of the light emitting diode LED.

CLAIMS

1. Apparatus for controlling the light of the headlights of a vehicle
   by controlling the current or voltage of the lamps of the headlights,
   <u>characterized in that</u> the light is controlled  either as a function
   of the brightness outside the vehicle or as a function of the state
   of motion of the vehicle.

2. Apparatus according to claim 1, <u>characterized in that</u> the long-distance
   light of the headlights is continously controlled as a function of the
   ambient light outside the vehicle.

3. Apparatus according to claim 1, <u>characterized in that</u> the long-distance
   light is controlled as a function of the spot light in front of the
   vehicle.

4. Apparatus according to claim 1, <u>characterized in that</u> for controlling
   the light of the headlight, light-sensing means are provided which are
   connected to electrical circuits and which are located behind the window
   of the vehicle.

5. Apparatus according to claim 1, <u>characterized in that</u> a first light
   sensing means (1,2,4,5,6,11,17 ;  ` 18   ) for sensing the ambient
   light is provided and that a second light sensing means ( 25,26,29
   31) for sensing spot light is provided.

6. Apparatus according to claim 1, <u>characterized in that</u> means (43,48,
   55,65  , 66 ) for switching of the long-distance light in a non-moving
   state of the vehicle is provided.

7. Apparatus according to claim 1, <u>characterized in that</u> a first circuit
   (1,2,4,5,6,11,17 `, ` 18     ) is provided for deciding whether a high
   beam or a low beam is to be actuated and that a second circuit (25,26,
   28,29 `, 31    ) is provided for controlling the intensity of the
   light  of the long-distance light, and that a third circuit (43,48,55,
   65 , 66) is provided for turning off the headlight during starting or
   stopping the vehicle.

0176615

8. Apparatus according to claim 7, <u>characterized in that</u> the first circuit comprises a lens, sensor means, aplification transistor means, an high impedance adjuster and relay for control, and that the second circuit comprises a lens, a photo sensor, a Darlington circuit and thyristors.

9. Apparatus according to claim 7, <u>characterized in that</u> in a non-moving state of the vehicle from a means indicating the non-movement of the vehicle, e.g. the ignition coil, signals are derived which, in turn, actuate a circuit for switching off or on the headlights.

1o. Apparatus accoring to claim 1, <u>characterized in that</u> the light of cars coming accross and the liaht of the vehicle are sensed as a combined light and that the light of the vehicle is controlled in such a manner that the sum of both lights cannot pass a given threshold and that the light of the vehicle after the cars have passed is controlled to said given threshold, so that no glare will occur.

11. Apparatus according to claim 1, <u>characterized by</u> the combination of:
   a) first optical sensor means (1, 2)
   b) first amplification means (4, 5, 6)
   c) differential amplification means (11)
   d) second amplification means (17, 18)
   e) first relay means (2o, 22, 24, 8o)
   f) second optical sensor means (25, 26)
   g) third amplifaction means (28, 29, 31)
   h) controllable switch means (23, 24)
   i) second relay means (69, 7o-73, 81, 82) being connected to said first relay means (2o, 22, 24, 8o) and to the headlights (75-78)
   j) third sensor means (41, 43) k) forth amplification means (48)

l) fifth amplification means (65, 66) for actuating
   the second relay means (69, 7o-73, 81, 82).

Fig. 1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | GB-A-1 529 523  (J.F. McGOWAR) <br> * Page 1, lines 26-44; claims * | 1,2,9 | B 60 Q    1/14 |
| A | | 7,11 | |
| X | US-A-4 236 099  (J. ROSENBLUM) <br> * Abstract; figure 3; claims * | 1-3 | |
| Y | | 11 | |
| A | US-A-3 283 161  (S. UBUKATA et al.) <br> *  Figure  9; column 1, line 61 - column 2, line 18; claims * | 1-10 | |
| Y | | 11 | **TECHNICAL FIELDS SEARCHED (Int. Cl. 4)** |
| A | CH-A-  521 632  (R. ANZINI) | | B 60 Q    1/00 <br> G 05 D   25/00 |
| A | DE-A-2 356 557  (DAIMLER-BENZ) <br> * Claims 1,7; figure 2 * | 1-4 | |
| A | DE-A-3 040 555  (R. DRUXEIS) <br> * Claim 5 * | 8 | |
| A | .DE-A-2 656 265  (FALLER oHG) | | |

The present search report has been drawn up for all claims

| Place of search | Date of completion of the search | Examiner |
|---|---|---|
| THE HAGUE | 03-05-1985 | BEYER F. |